# EUROPEAN PATENT APPLICATION

(11) **EP 1 903 381 A1**
(43) Date of publication of application: **26.03.2008**
(21) Application number: 07018224.1
(22) Date of filing: 17.09.2007
(51) Int. Cl.: G02F 1/13357

(54) **Liquid crystal display device**

(30) Priority: 25.09.2006 JP 2006258347
(71) Applicant: IPS Alpha Technology, Ltd., Mobara-shi Chiba (JP)
(72) Inventor: Ito, Yoichi, Chiba-ken (JP)
(74) Representative: Beetz & Partner

(57) **Abstract**

A liquid crystal display device has a backlight structural body (BL) which is mounted on a back surface of a liquid crystal display panel and includes a plurality of external electrode fluorescent lamps (EFL) arranged on a surface of a back surface plate (RPL), a pair of power supply terminals (TM) which electrically connects the external electrode fluorescent lamps in parallel, an inverter printed circuit board (INV) which controls the external electrode fluorescent lamps, and power supply cables (CBL1,CBL2) which connect the power supply terminals and the inverter printed circuit board. The inverter printed circuit board is arranged on a lower side portion of a back surface of the back surface plate on a side opposite to a surface of the back surface plate on which the liquid crystal display panel is mounted.

## Description

The present application claims priority from Japanese application JP2006-258347 filed on September 25, 2006, the content of which is hereby incorporated by reference into this application.

### BACKGROUND OF THE INVENTION

### 1. Field of the Invention

The present invention relates to a liquid crystal display device, and more particularly to a backlight structural body which uses external electrode fluorescent lamps (EEFL), and more particularly to the arrangement structure of an inverter printed circuit board which controls the external fluorescent lamps.

### 2. Description of the Related Art

As a display device for a television receiver set or an information digital assistant, a liquid crystal display device has been popularly used. Generally, in such a liquid crystal display device which is relatively large-sized and is required to posses a screen with high brightness, as a backlight structural body which constitutes an auxiliary illumination device of the liquid crystal display device, a so-called direct light type backlight structural body which arranges a plurality of linear light sources on a back surface of the liquid crystal display panel and directly radiates light from the linear light sources to the back surface of the liquid crystal display panel is adopted. Here, "direct light type" is an expression which is used in contrast with a so-called side-light-type backlight structural body which performs illumination by arranging a linear light source similar to the above-mentioned linear light source on a side of a light guide plate which is mounted on a back surface of the liquid crystal display panel.

In the direct-light-type backlight structural body, a cold cathode fluorescent lamp (CCFL) has been popularly used as the linear light source. In general, in the inside of the direct-light-type backlight structural body, a plurality of cold cathode fluorescent lamps is arranged in parallel. However, with respect to the cold cathode fluorescent lamps, an inverter circuit is directly connected to one cold cathode fluorescent lamp or one of two cold cathode fluorescent lamps and hence, it is necessary to perform wiring from the respective lamps to the inverter circuits thus necessitating complicated wiring. Patent document 1 and patent document 2 disclose examples which adopt such a constitution.

Recently, in place of the cold cathode fluorescent lamps, the use of external electrode fluorescent lamps (EEFL) has been observed. Different from the existing cold cathode fluorescent lamps, the external electrode fluorescent lamps have electrodes outside the lamps and hence, the connection can be easily performed and, at the same time, a plurality of fluorescent lamps can be connected to an inverter circuit in parallel. Accordingly, the external electrode fluorescent lamps can, by making use of such parallel connection, perform the connection of the respective fluorescent lamps to the inverter circuit using a common line thus decreasing the number of lines. Further, the number of the inverter circuits used for the external electrode fluorescent lamps become smaller than the number of inverter circuits used for the cold cathode fluorescent lamps. Examples which use such external electrode fluorescent lamps are disclosed in patent document 3, patent document 4 and patent document 5 and the like.
Patent Document 1: JP-A-2002-231034 (corresponding US patent application US6661181)
Patent Document 2: JP-A-6-230382
Patent Document 3: JP-A-2005-347259 (corresponding US patent application US2005/0265047A1)
Patent Document 4: JP-A-2004-164907 (corresponding US patent application US6984056)
Patent Document 5: JP-A-2003-107463

### SUMMARY OF THE INVENTION

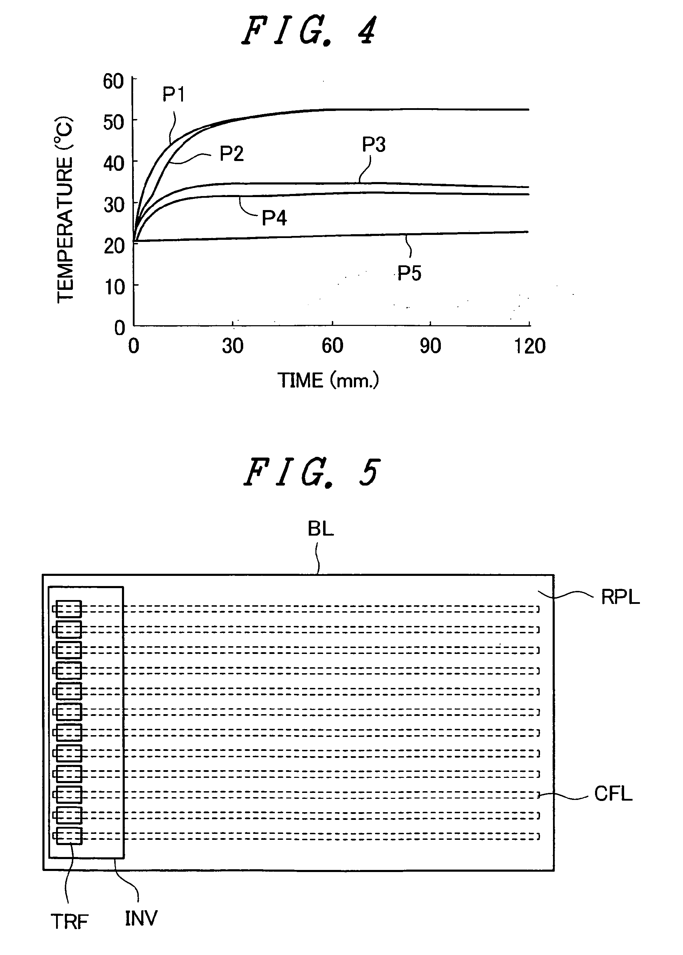

In the conventional backlight structural body BL which uses the cold cathode fluorescent lamps, as shown in Fig. 5 which is a schematic plan view as viewed from a surface of a back-surface plate RPL on a side opposite to a surface of the back-surface plate RPL on which the cold cathode fluorescent lamps are mounted, an inverter circuit which includes a transformer TRF and the like is provided for every cold cathode fluorescent lamp CFL and hence, an inverter printed circuit board INV is arranged on a back surface of a structural body for mounting fluorescent lamps on which the cold cathode fluorescent lamps CFL are arranged, the plurality of inverter circuits are mounted on the inverter printed circuit board INV and are arranged to be positioned on one end side of back surfaces of ends of the respective fluorescent lamps, and power supply cable is pulled around from the ends of the respective fluorescent lamps to the respective inverter printed circuit boards INV with a shortest distance, in general.

In such a constitution, driving of the cold cathode fluorescent lamps CFL is performed one by one and hence, the inverter printed circuit board INV is arranged in the longitudinal direction with respect to the cold cathode fluorescent lamps CFL arranged in parallel in the lateral direction.

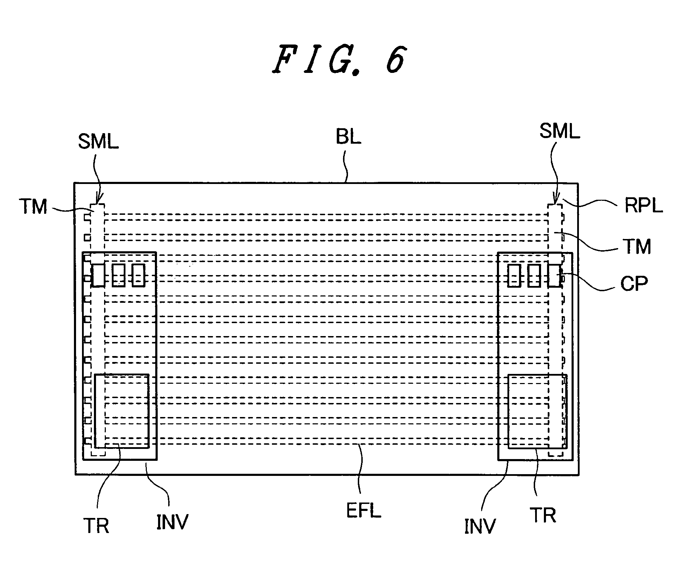

On the other hand, in the backlight structural body BL which uses the external electrode fluorescent lamps EFL, as shown in Fig. 6 which is a schematic plan view as viewed from a surface of the back-surface plate RPL on a side opposite to a surface of the back-surface plate RPL on which the external electrode fluorescent lamps EFL are arranged, the external electrode fluorescent lamps EFL can be connected in parallel between a pair of side mold frames SML which include power supply terminals TM provided for fixedly holding the plurality of external electrode fluorescent lamps EFL and for supplying electricity. Accordingly, an inverter printed circuit board INV which mounts a transformer TR and an electrolytic capacitor CP and the like thereon can be mounted in a two-split manner on both end sides. Due to such an arrangement, the number of power supply cables for connecting the inverter printed circuit board INV and the external electrode fluorescent lamps EFL can be decreased. Accordingly, with the provision of the external electrode fluorescent lamps EFL, fluorescent-lamp assembling steps can be largely simplified.

By adopting such a constitution, the external electrode fluorescent lamps EFL can be driven in parallel and hence, it is possible to supply electricity using the power supply terminals TM which also function as electrode holders. Also in this case, on both end sides of the external electrode fluorescent lamps EFL which are arranged in parallel in the lateral direction, the inverter printed circuit board INV is mounted in the longitudinal direction (longitudinal arrangement).

However, the external electrode fluorescent lamps EFL require parallel driving and hence, it is necessary for an inverter to ensure a large output power whereby the transformer TR becomes large-sized. Further, with respect to the dielectric characteristic of the capacitor CP, different from the cold cathode fluorescent lamp CFL, the capacitor CP is required to possess high dielectric characteristic. A conventional ceramic capacitor cannot maintain the dielectric characteristic. Accordingly, it is inevitably necessary to adopt the electrolytic capacitor CP. Usually, the electrolytic capacitor CP lowers temperature lifetime characteristic thereof when a temperature is elevated and hence, the electrolytic capacitor CP cannot be used in a high-temperature region.

Further, the use of the external electrode fluorescent lamps EFL in the backlight structural body has started recently and hence, there still exists a drawback that there are many points to be improved with respect to constitutional members of the inverter circuit, the structure for mounting the inverter printed circuit board INV, the assurance of dilating and the like.

The present invention has been made to overcome the above-mentioned conventional drawbacks, and it is an object of the present invention to provide a liquid crystal display device having a backlight structural body which adopts external electrode fluorescent lamps using inexpensive constitutional members while assuring dilating of an inverter circuit by adopting an electrolytic capacitor having temperature lifetime characteristic in an inverter circuit.

To achieve the above-mentioned obj ect, the liquid display device according to one aspect of the present invention for achieving such an object is constituted of a liquid crystal display panel and a backlight structural body which is mounted on a back surface of the liquid crystal display panel. The backlight structural body includes a back surface plate, a plurality of external electrode fluorescent lamps which is arranged in parallel on a surface of the back surface plate on which the liquid crystal display panel is mounted, a pair of power supply terminals which electrically connects the external electrode fluorescent lamps in parallel, an inverter printed circuit board which controls the external electrode fluorescent lamps, and a power supply cable which connects the power supply terminals and the inverter printed circuit board, wherein the inverter printed circuit board is arranged on a back surface of the surface of the back surface plate on which the liquid crystal display panel is mounted and at a position below the back surface plate when the liquid crystal display device is in use. Due to such a constitution, the inverter printed circuit board is hardly influenced by the heat convection in the inside of the backlight structural body and hence, it is possible to overcome the drawbacks of the related art.

Further, the liquid crystal display device according to another aspect of the present invention is characterized in that, in the above-mentioned constitution, a long side of the inverter printed circuit board may preferably be mounted in the lateral direction along a lower side portion of a back surface of the inverter printed circuit board.

According to the present invention, the inverter circuit which mounts the electrolytic capacitor thereon is hardly influenced by the heat convection in the inside of the backlight structural body. Accordingly, the temperature lifetime characteristic of the electrolytic capacitor mounted on the inverter printed circuit board can be maintained over a long period and hence, the present invention can obtain excellent advantageous effects such as the easy realization of the liquid crystal display device using external electrode fluorescent lamps.

Further, according to the present invention, it is possible to obtain extremely excellent advantageous effects such as the easy realization of the liquid crystal display device which includes the backlight structural body which can ensure dilating of the inverter circuit by adopting the electrolytic capacitor having temperature lifetime characteristic in the inverter circuit.

### BRIEF DESCRIPTION OF THE DRAWINGS

Fig. 1 is an exploded perspective view of a backlight structural body for explaining an embodiment of a liquid crystal display device according to the present invention;
Fig. 2 is a schematic plan view of a surface of a back surface plate shown in Fig. 1 as viewed from a side opposite to a surface of the back surface plate on which external electrode fluorescent lamps are mounted;
Fig. 3 is a schematic plan view showing a temperature distribution measuring point of the backlight structural body;
Fig. 4 is a view showing the temperature elevation of the backlight structural body with respect to a fluorescent lamp turn-on period;
Fig. 5 is a schematic plan view of a back plate of the backlight structural body adopting conventional external electrode fluorescent lamps as viewed from a surface of the back surface plate on a side opposite to a surface of the back surface plate on which the cold cathode fluorescent lamps are mounted; and
Fig. 6 is a schematic plan view of the back plate of the backlight structural body adopting the conventional cold cathode fluorescent lamps as viewed from a surface of the back surface plate on a side opposite to a surface of the back surface plate on which external electrode fluorescent lamps are mounted.

### DESCRIPTION OF THE PREFERRED EMBODIMENT

Hereinafter, a best mode for carrying out the present invention is explained in detail in conjunction with drawings of embodiments. Here, in the respective drawings for explaining the following embodiments, parts having identical functions are given same numerals and their repeated explanation is omitted.

### Embodiment 1

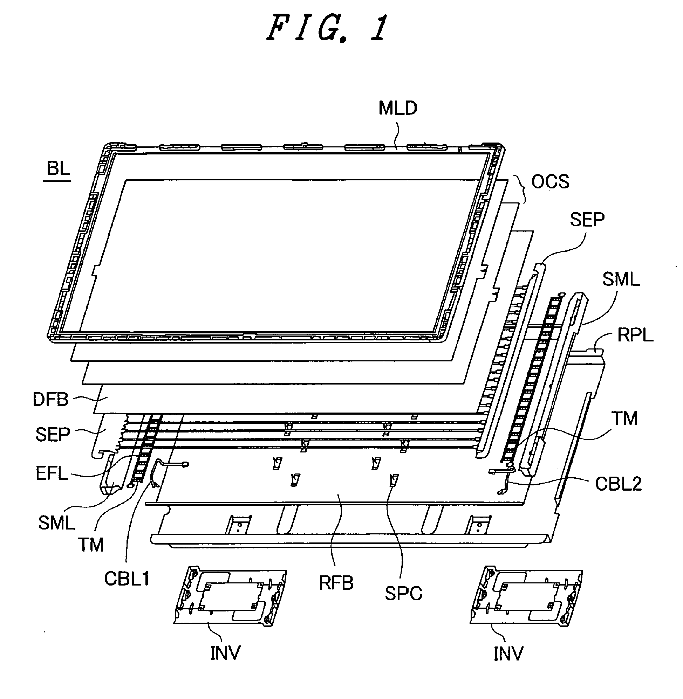

Fig. 1 is an exploded perspective view showing an embodiment 1 of a backlight structural body which is used in a liquid crystal display device according to the present invention. The backlight structural body is of a direct light type. A backlight structural body BL of this embodiment is configured such that a reflection sheet RFB, a pair of side mold frames SML which includes power supply terminal TMs for fixedly holding a plurality of external electrode fluorescent lamps EFL which constitutes a linear light source, space restriction plates SEP which maintain a distance between end portions of the plurality of external electrode fluorescent lamps EFL, a diffusion plate DFB, and a group of optical compensation sheets OCS which is formed by stacking a prism sheet, a diffusion sheet and the like are arranged in order between a back surface plate RPL which is formed of a metal plate material and a mold frame MLD which is formed of a resin molded body in a frame shape.

Here, in the backlight structural body BL having such a constitution, spacers SPC are mounted on the back surface plate RPL in an erected manner for suppressing the non-uniformity of illumination distribution attributed to the deflection of the large-sized diffusion plate DFB. The spacers SPC are brought into contact with a back surface of the diffusion plate DFB through holes formed in the reflection sheet RFB. Further, the spacers SPC may include the branch-like projection structure which suppresses the deflection of the elongated external electrode fluorescent lamps EFL. A liquid crystal display panel not shown in the drawing is arranged on the mold frame MLD.

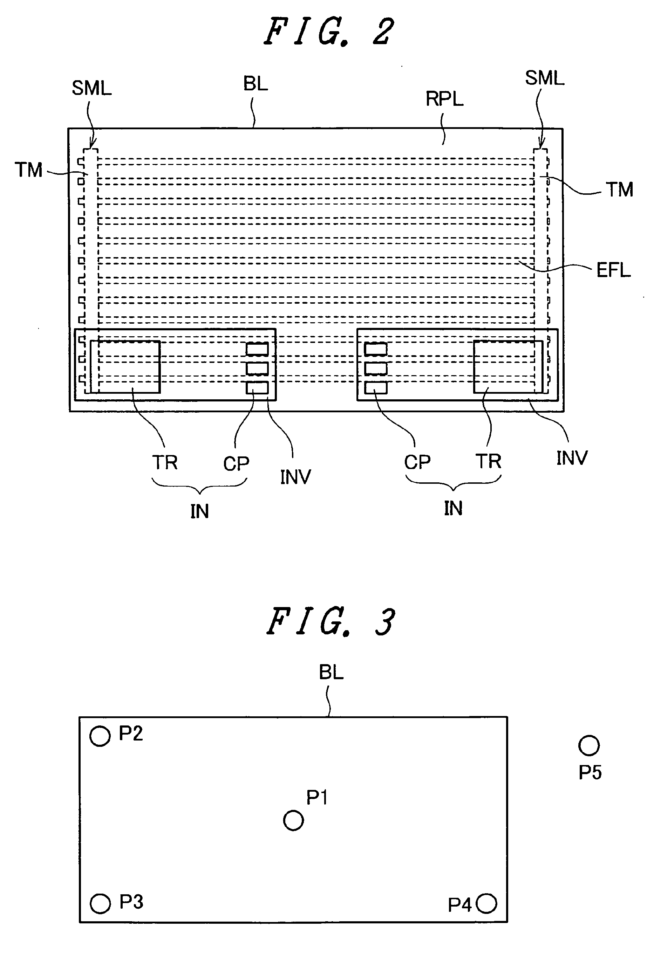

Further, on both end sides of a lower side portion of a surface of the back surface plate RPL on a side opposite to a surface of the back surface plate RPL on which the external electrode fluorescent lamps EFL are mounted, as shown in Fig. 2 which is a schematic plan view, a pair of inverter printed circuit boards INV which drives the plurality of external electrode fluorescent lamps EFL with phase inversion of the respective lamps EFL is mounted. The inverter printed circuit board INV mounts an inverter circuit IN which is constituted of a toroidal-coil-type transformer TR, an electrolytic capacitor CP and the like thereon.

Further, in the inverter circuit IN of the inverter printed circuit board INV on a left side in the drawing, the external electrodes which are mounted on one end side of the plurality of external electrode fluorescent lamps EFL are electrically connected to the power supply terminals TM of the side mold frame SML by way of a power supply cable CBL1. Further, in the inverter circuit IN of the inverter printed circuit board INV on a right side in the drawing, the external electrodes which are mounted on another end side of the plurality of external electrode fluorescent lamps EFL are electrically connected to the power supply terminals TM of the side mold frame SML by way of a power supply cable CBL2. Here, a high frequency current flows in the power supply cables CBL1, CBL2 and hence, it is preferable to make a length of the cable as short as possible.

Further, drive voltages whose phases are inverted from each other are supplied to the external electrodes formed on both ends of the external electrode fluorescent lamp EFL in synchronism. With respect to the drive voltages, a high frequency output of the inverter circuit IN is supplied to one external electrode, and a high frequency output whose phase is inverted by the transformer TR is supplied to another external electrode.

In assembling such a liquid crystal display device, the liquid crystal display panel and the backlight structural body BL are independently assembled using respective steps and, thereafter, the liquid crystal display panel is integrally formed on the backlight structural body BL in an overlapping manner. The backlight structural body BL is obtained by assembling a plurality of members shown in Fig. 1. That is, the reflection sheet RFB is mounted on the back surface plate RPL, the side mold frames SML are mounted on both left and right ends of the reflection sheet RFB, the external electrode fluorescent lamps EFL are set such that the lamps EFL extend between the power supply terminals TM which are formed on both side mold frames SML, and the power supply terminal TM portions are covered with the space restriction plates SEP.

The space restriction plates SEP include, comb-shaped teeth which are interposed between the space restriction plates SEP. The diffusion plate DFB is arranged on the space restriction plates SEP, the group of optical compensation sheets OCS is stacked on the diffusion plate DFB and, thereafter, the frame-shaped mold frame MLD is arranged on the group of optical compensation sheets OCS. Then, these parts are integrally fixed all together using bolts or the like. Finally, the inverter printed circuit boards INV are arranged on both end sides of the lower side portion of the surface of the back surface plate RPL on a side opposite to the surface on which the external electrode fluorescent lamps EFL are mounted and are integrally fixed to the surface using bolts.

In the inside of the backlight structural body BL having such a constitution, it is confirmed that hot air generated by heat which is radiated from the plurality of external electrode fluorescent lamps EFLmoves from the lower side portion toward the upper side portion due to a convection phenomenon thus generating the temperature difference between the lower side portion and the upper side portion, that is, a temperature at the lower side portion being set lower than a temperature at the upper side portion by approximately 20°C. In the above-mentioned constitution, the electrolytic capacitor CP having the temperature lifetime characteristic and is arranged on the inverter circuit IN is mounted on a back surface lower side portion of the back surface plate RPL where the heat convection is not generated. Accordingly, the electrolytic capacitor CP is hardly influenced by the heat convection thus largely prolonging the temperature lifetime characteristic of the electrolytic capacitor CP.

Further, with respect to the temperature distribution in the inside of the backlight structural body BL, due to the generation of the temperature difference of approximately 20°C between the lower side portion and the upper side portion, it is possible to reduce the heat of radiation attributed to the back surface plate RPL.

Further, inventors of the present invention manufactured a 37-inch diagonal liquid crystal display device by assembling the backlight structural body BL having such a constitution to the liquid crystal panel and installed the liquid crystal display device in an actually-used state. Then, the inventors measured the temperature distribution in the inside of the backlight structural body BL.

Fig. 3 is a schematic plan view of the backlight structural body BL as viewed from a liquid crystal display panel side. In Fig. 3, symbols P1 to P4 indicate measuring points at which the temperature distribution in the inside of the backlight structural body is measured, and symbol P5 indicates a measuring point at which a room temperature of a peripheral potion where the liquid crystal display device is installed is measured. Symbol P1 indicates the measuring point at a center position of the screen, symbol P2 indicates the measuring point at a left upper portion of the screen, symbol P3 indicates the measuring point at a left lower portion of the screen, symbol P4 indicates the measuring point at a right lower portion of the screen, and symbol P5 indicates a temperature of the peripheral portion where the liquid crystal display device is formed by assembling the backlight structural body and the liquid crystal display panel, that is, a so-called "room temperature measuring portion".

First of all, the plurality of external electrode fluorescent lamps are turned on, and the temperature elevations of the inside of the backlight structural body at the respective measuring points P1, P2, P3, P4 and P5 are measured for every thirty minutes. A result of measurement is shown in the following Table 1 and Fig. 4.

**Table 1**

| unit: C° | after 60 minutes | | After 120 minutes | |
|---|---|---|---|---|
| | actually measured value | ΔT | actually measured value | ΔT |
| P1 | 51.9 | 31.0 | 52.4 | 30.9 |
| P2 | 51.8 | 30.9 | 52.4 | 30.9 |
| P3 | 34.1 | 13.2 | 34.0 | 12.5 |
| P4 | 31.6 | 10.7 | 31.9 | 10.4 |
| P5 | 20.9 | - | 21.5 | - |

As can be clearly understood from Fig. 4, it is apparent that, after the external electrode fluorescent lamps are turned on, the temperature in the inside of the backlight structural body is gradually increased from a room temperature due to the heat convection and is held with the fixed temperature distribution after a lapse of approximately 30 minutes. Here, in Table 1, Symbol ΔT shows temperature elevation values which are obtained by subtracting the room temperature P5 from the actually measured temperature values at the respective measuring points P1, P2, P3 and P4.

As can be clearly understood from such a result, it is apparent that the temperature difference of approximately 20°C is generated between the lower side portion and the upper side portion of the backlight structural body BL. Accordingly, it is found that the electrolytic capacitor CP which is arranged on the lower side portion of the back surface of the back surface plate RPL of the backlight structural body BL is hardly influenced by the heat convection.

## Claims

1. A liquid crystal display device comprising:
a liquid crystal display panel; and
a backlight structural body (BL) which is mounted on a back surface of the liquid crystal display panel, wherein
the backlight structural body includes:
a back surface plate (RPL);
a plurality of external electrode fluorescent lamps (EFL) which is arranged in parallel on a surface of the back surface plate on which the liquid crystal display panel is mounted;
a pair of power supply terminals (TM) which electrically connects the external electrode fluorescent lamps in parallel,
an inverter printed circuit board (INV) which controls the external electrode fluorescent lamps; and
a power supply cable (CBL1, CBL2) which connects the power supply terminals and the inverter printed circuit board; and
the inverter printed circuit board is arranged on a back surface of the surface of the back surface plate on which the liquid crystal display panel is mounted and at an edge of the back surface plate which becomes a lower edge when the liquid crystal display device is in use.

2. A liquid crystal display device according to claim 1, wherein at least a transformer (TR) and an electrolytic capacitor (CP) aremountedon the inverter printed circuit board.

3. A liquid crystal display device according to claim 1, wherein the inverter printed circuit board is formed into a rectangular shape and has a long side thereof arranged along a side of the back surface plate which becomes a lower side when the liquid crystal display device is in use.

4. A liquid crystal display device according to claim 3, wherein the electrolytic capacitor is arranged on a lowermost portion of the inverter printed circuit board in a use-and-arrangement state.

5. A liquid crystal display device according to claim 1, wherein the inverter printed circuit board is constituted of a pair of boards, and one of the pair of inverter printed circuit boards is connected to one of the pair of power supply terminals and another of the pair of inverter printed circuit boards is connected to another of the pair of power supply terminals.

6. A liquid crystal display device according to claim 1, wherein the liquid crystal display device includes a side mold frame for fixing the power supply terminals, and the side mold frame is arranged along a short side of the back surface plate.

7. A liquid crystal display device according to claim 1, wherein the power supply cable is arranged at a position where the power supply cable constitutes a lower side when the liquid crystal display device is in use and in a state that the power supply cable is pulled around from the surface of the back surface plate on which the liquid crystal display panel is mounted to the back surface of the back surface plate.

8. A liquid crystal display device according to claim 1, wherein a side of the inverter printed circuit board in the height direction is arranged to be housed below a half of a side of the back surface plate in the height direction in a use-and-arrangement state.
